Europäisches Patentamt

**European Patent Office** (11) Publication number: **0 091 803**

Office européen des brevets **A1**

(12) **EUROPEAN PATENT APPLICATION**

(21) Application number: **83301991.2** (51) Int. Cl.³: **F 16 N 7/34**
**F 16 N 19/00**

(22) Date of filing: **08.04.83**

(30) Priority: **13.04.82 GB 8210635**

(43) Date of publication of application:
**19.10.83 Bulletin 83/42**

(84) Designated Contracting States:
**AT BE CH DE FR GB IT LI LU NL SE**

(71) Applicant: **WATTS FLUID POWER LIMITED**
**London Road**
**Thrupp Gloucestershire, GL5 2BA(GB)**

(72) Inventor: **Clarke, Douglas Cecil**
**54 Marlin Crescent Pagenhill**
**Stroud Gloucestershire, GL5 2BA(GB)**

(74) Representative: **Alexander, Thomas Bruce et al,**
**Boult, Wade & Tennant 27 Furnival Street**
**London EC4A 1PQ(GB)**

(54) A sump for compressed air system.

㉗ A sump (60) for use in filters and lubricators for a compressed air system comprises an inner metal bowl (61) which is attached to a body portion of the filter (3) or lubricator (4). A sleeve (62) of transparent plastics material (for example, polycarbonate) surrounds part of the metal bowl and is sealed at its edges. Ports (65,66) in the metal bowl connect an annular clearance volume (63) between the sleeve and the bowl to the interior of the bowl so that the level of liquid in the sump can be seen from any side of the bowl. The body portion (10) may be common to the filter and lubricator and to a regulation so that all the components are modular.

FIG 3

EP 0 091 803 A1

Croydon Printing Company Ltd.

## A Sump for Compressed Air System

This invention relates to a sump which is arranged such that the level of a liquid within the sump may be seen when the sump itself is not transparent.

More specifically, this invention relates particularly, but not exclusively, to sumps for use in compressed air systems in such items as filters and lubricators. In both of these cases it is necessary to be able to easily see the level of the liquid within the sump, in the case of filters, so that the operator knows when to drain the sump, and in the case of lubricators, so that the operator knows when the lubricator needs refilling. Thus the sump of such items normally include a sight glass.

The current methods employed for sight glass construction fall into two groups. In one of these the bowl is made entirely from a transparent material usually polycarbonate which of course will give a $360^{\circ}$ visual sight glass. Otherwise the bowl is made from metal and the sight glass is fitted to the side of the bowl, normally in the form of a tube. This type will not give a $360^{\circ}$ visual sighting.

The problems with the existing methods are that with a complete polycarbonate bowl, although giving perfect visibility, it is liable to become brittle under certain conditions of chemical or solvent attack such that a bowl will become brittle and fail. Because of this possibility it is the current practice of many manufacturers to use an additional metal or plastic bowl guard that would contain the polycarbonate bowl in case of failure. The fitting of a bowl guard destroys much of the advantage of a clear polycarbonate bowl and the small holes or slots cut in the guard to check the level condensate makes visual sighting of the level of condensate more difficult.

With the second type of sight glass, easy reading of the condensate level is difficult, nor is $360^{\circ}$ visual sighting possible.

In accordance with the present invention there is provided a sump for air filtration or lubrication apparatus and comprising an inner metal bowl, and a transparent casing of plastics material surrounding at least part of the bowl, there being a clearance volume between the outside of the metal bowl and the inside of the plastics casing, a plurality of ports through the metal bowl connecting the inside of the bowl to the clearance volume and the edges of the plastics casing being sealed to the metal bowl.

Preferably, part of the length of the bowl is generally cylindrical, and the plastics casing is a sleeve coaxial with the said cylindrical portion of the metal bowl.

There may be a drain fitted to the sump in order to ease the emptying of any unwanted fluid that builds up within the sump.

Preferably, the clearance volume completely encircles the metal bowl, so that the liquid level within the sump may be seen around the whole sump.

Optionally, the sump may be removable from the unit to which it is attached, to facilitate cleaning or replacement. The plastics casing may be made from polycarbonate.

The present invention also provides an air filter unit for a compressed air system that is fitted with a sump of this invention, as well as a lubricator unit for a compressed air system that is fitted with a sump of this invention.

The details of a preferred embodiment of this invention will be described, by way of example, with reference to the accompanying drawings, in which:-

Figure 1 shows a filter, regulator and lubricator assembly for use in a compressed air supply line;

Figure 2 shows an exploded view of the assembly of Figure 1, showing the common main body unit;

Figure 3 shows a section of the sump unit that is used in both the filter and lubricator as shown in Figure 1;

Figure 4 shows a section of a assembled filter of Figure 1;

Figure 5 shows a sectional view of the common main body unit as shown in Figure 2;

Figure 6 shows a top part of the filter unit this being one of the components of the filter of Figure 4;

Figure 7 shows a filter holder, this also being a component of the filter of Figure 4; and

Figure 8 shows a section of the lubricator of Figure 1.

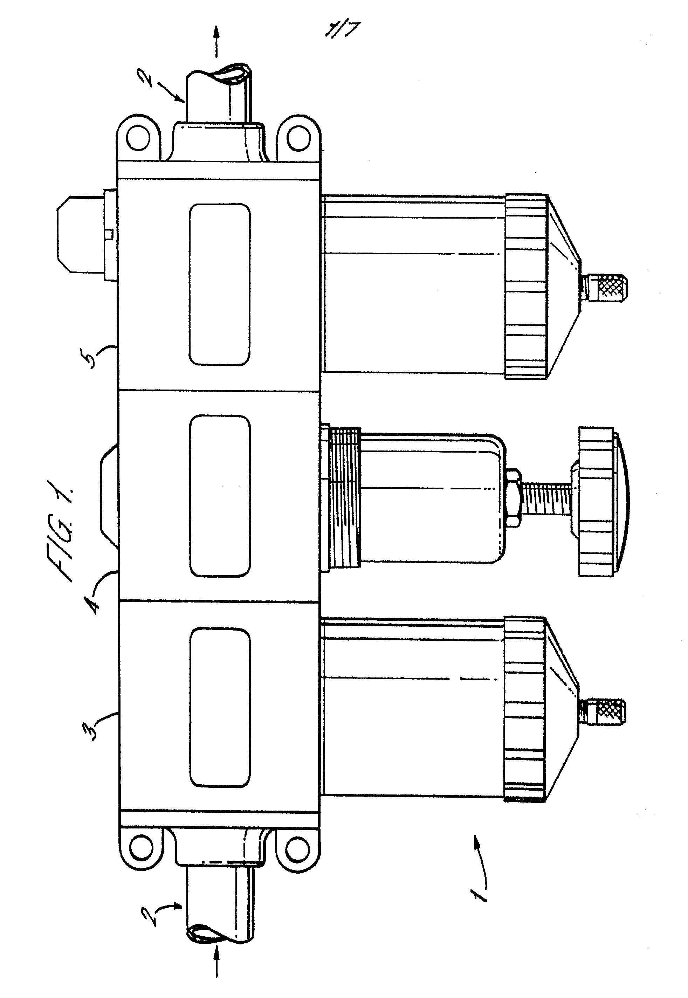

A filter, regulator and lubricator assembly 1, as shown in Figure 1, may be inserted into a supply line 2 of a compressed air system. The functions carried out by the parts of this assembly, as their names suggest, are as follows:

the filter 3 is to filter the air,

the regulator 4 is to regulate the flow of the air;  and

the lubricator 5 is to spray a fine mist of lubricant into the air to ensure that the air tools to which this air is supplied are kept properly lubricated.

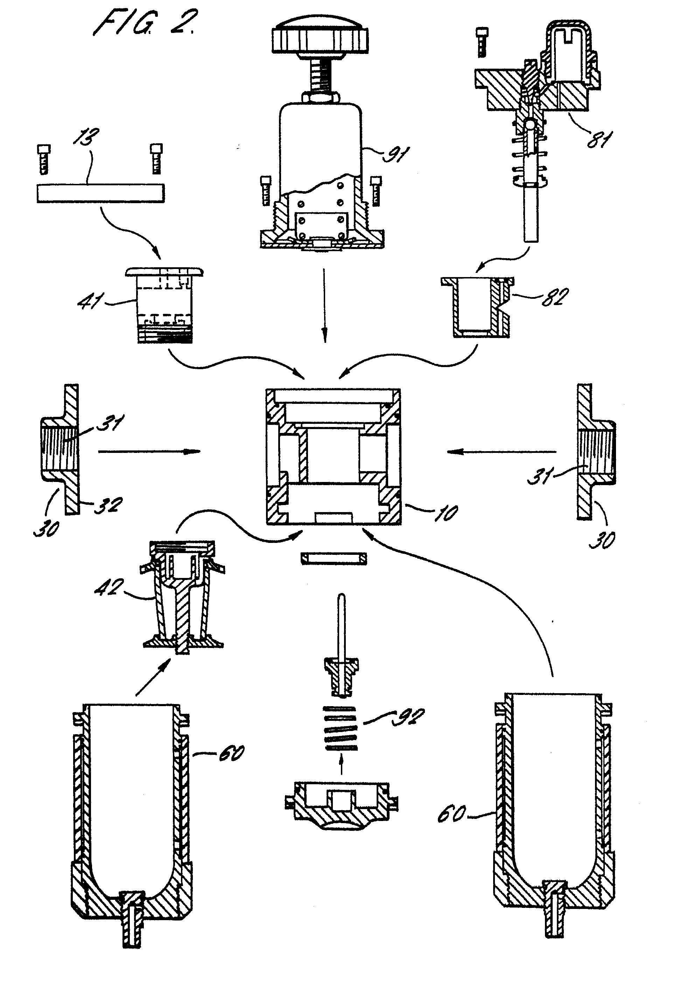

Such an assembly may well not always require to have all three functions available, or replacement parts may need to be inserted into the assembly, and so this assembly is constructed in a modular form. This may be more clearly seen in Figure 2, where the assembly is shown in exploded form.

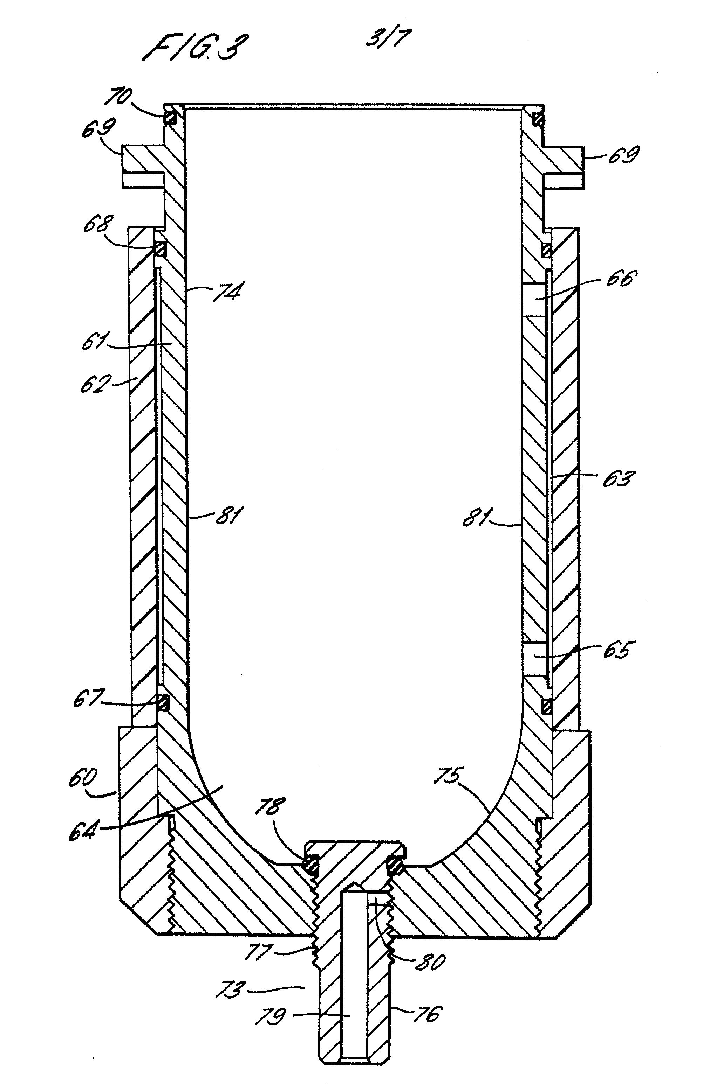

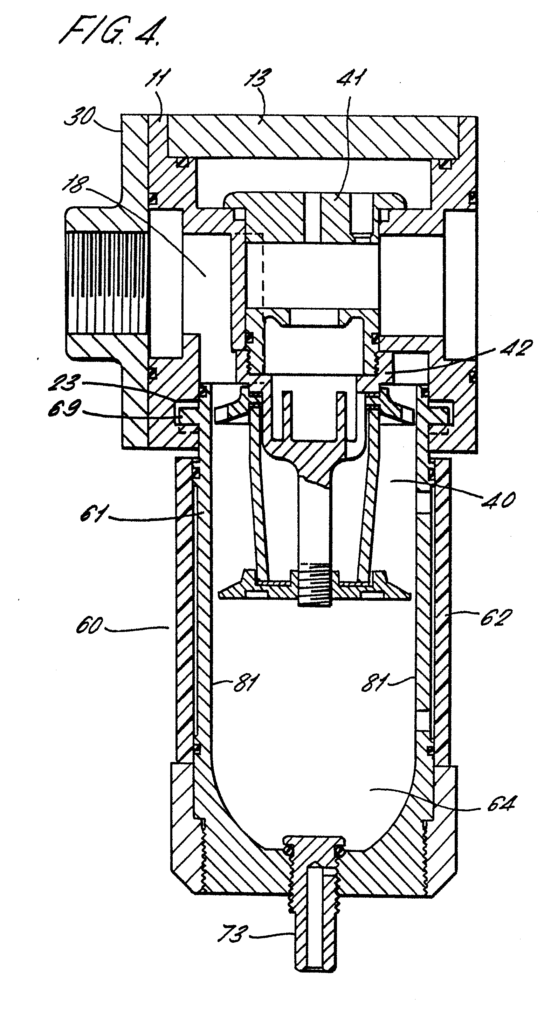

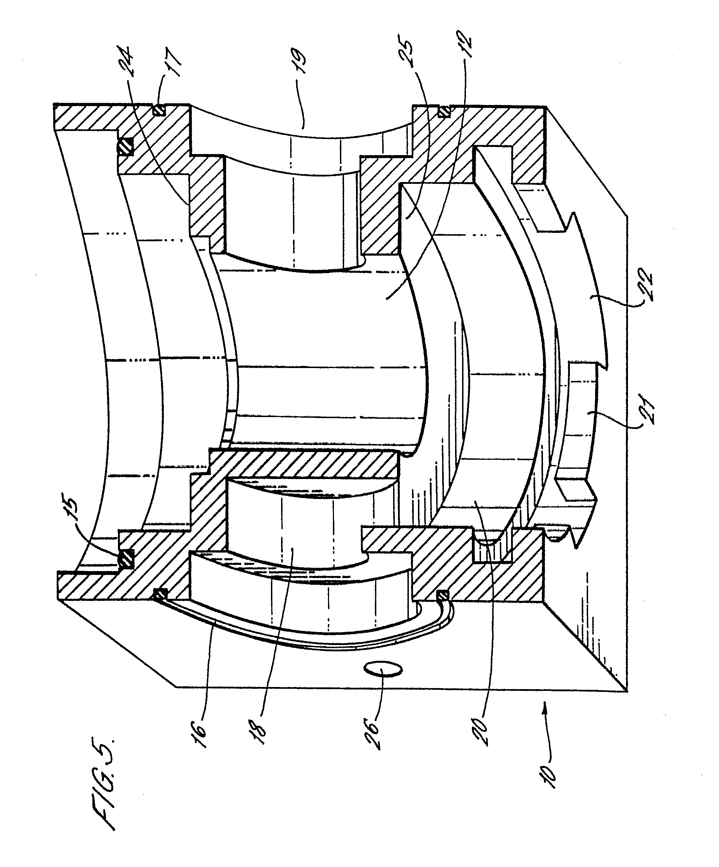

From Figure 2 it may be seen that the filter 3, the regulator 4 and the lubricator 5 all have a main body 10 of the same shape. These main bodies are designed to stack side by side, the details of the main body unit 10, being shown more clearly in Figure 5. Within the main body unit 10 is a central bore 12, which passes from the top of the body unit through to the bottom. Two access ports 18 and 19 connect bore 12 with the two sides of the main body 10. The ports 18 and 19 are such that when two bodies 10 are abuted side by side, then the opening of port 18 in the abutment face of one body will align with the opening of port 19 in the abutment face of the other body. Thus a passageway is formed between the bores 12 of two such bodies 10, and due to circular seals 16 and 17, this passageway remains airtight whilst the two bodies 10 are together.

Also shown in Figure 2 are flanges 30 with ports 31, which may similarly abut, with their flat sides 32, the side of a main body unit 10, the passageway formed by ports 31 and either 18 or 19 again being sealed by either seal 16 or seal 17, depending on which side of main body unit 10 the flange 30 is situated.

To fix the main body units 10 side by side, bolt holes 26 are provided from one side to the other of each body unit.

Corresponding holes exist in the flanges 30 so that when the bodies 10 and flanges 30 are in position, the bolt holes align, enabling the main bodies 10 and flanges 30 of the unit to be bolted together. A nut may be inserted into a slot perpendicular to a bolt hole so that when a bolt is passed down to the bolt hole it will engage, and can be screwed into the nut, which allows the use of bolts, which are not as long as assembly. Using such a nut allows the middle part of assembly 1 to be removed even when the two ends are fixed in place, or alternatively allows one half of the assembly to be disassembled for servicing independently of the other half.

Figure 2 also shows the other components which attach to the relevant main body 10 in order to perform the various functions of the filter, regulator and lubricator assembly 1. Thus the filter 3 is constructed from a top cap 13, a filter unit consisting of parts 41 and 42, and a sump 60. Similarly the lubricator 5 consists of a lubricator top 81, a lubricator valve 82 and a sump 60. The regulator 5 consists of a regulator top 91, and a valve and cap assembly 92.

Considering firstly the filter 3, the unfiltered air will enter port 18, as shown in Figure 4. The lower portion of bore 12 of the main body 10 is of enlarged radius, and is designated as cavity 20 and shown in Figure 5. The top of the sump 60 fits within cavity 20 as shown.

There is a circular recess 23 in the side of the cavity 20, below which recess there are, alternately around the cavity 20, slots 22 and lugs 21.

Sump 60, as shown in Figure 3, comprises essentially a metal bowl 61 with an upper cylindrical portion 74 and a lower curved portion 75.

The cylindrical metal portion 74 is surrounded by a transparent polycarbonate sleeve 62, of larger internal diameter than the external diameter of portion 74, so that a clearance volume 63 exists between the two, this clearance volume extending around the entire circumference of the cylindrical portion 74.

This clearance volume 63 is connected to the inside 64 of the metal bowl by two ports 65 and 66, port 65 being adjacent the top of the clearance volume.

The clearance volume is sealed top and bottom by seals 68 and 67 respectively. Thus fluid may only enter or leave the clearance volume 63 via either port 65 or port 66.

Ports 65 and 66 may be equipped with rubber valves (not shown) which ordinarily are open and allow fluid to pass through either port. In the event of a sudden drop in pressure in the clearance volume 63, however, these valves would be forced to close and so minimise the pressure drop in the metal bowl 61. This closure of the valves would also have the effect of minimising any explosion following the shattering of the polycarbonate sleeve 62.

At the closed end of the bowl 61, in portion 75 is a drain 73. This drain consists of a plug 76 with an external screw thread 77 which engages a matching thread internal to a hole through the bowl in portion 75. The plug 76 lies within this hole. The plug has a seal 78 around its upper end, such that when the plug 76 is screwed down, seal 78 will prevent any fluid from passing through the hole in portion 75. Inside plug 76 is a bore 79 which passes centrally up through the plug but stops short of the top of the plug 76. This bore then connects via a short bore 80 with the surface of the plug 76 below the seal 78. Thus when the plug is screwed upwards the bore 79 will be connected to the inside of the bowl 61 and any fluid in the bowl 61 can then flow through bore 80 and then bore 79, out of the bowl.

Towards the top of the bowl 61 there are located on the outside four lugs 69 which serve to hold the sump 60 in place on the main body 10. To connect sump 60 to main body 10 it is necessary to push the lugs 69 through the slots 22 in the underside of main body 10 until the lugs 69 are located within the recess 23 and then turning the sump 60 relative to the main body 10 until lugs 69 lie above lugs 21. The sump 60 is thus retained in position, and when pressure is applied inside the main body and in the sump, this joint is forced to become more positive. The joint between sump 60 and main body 10 is sealed by seal 70.

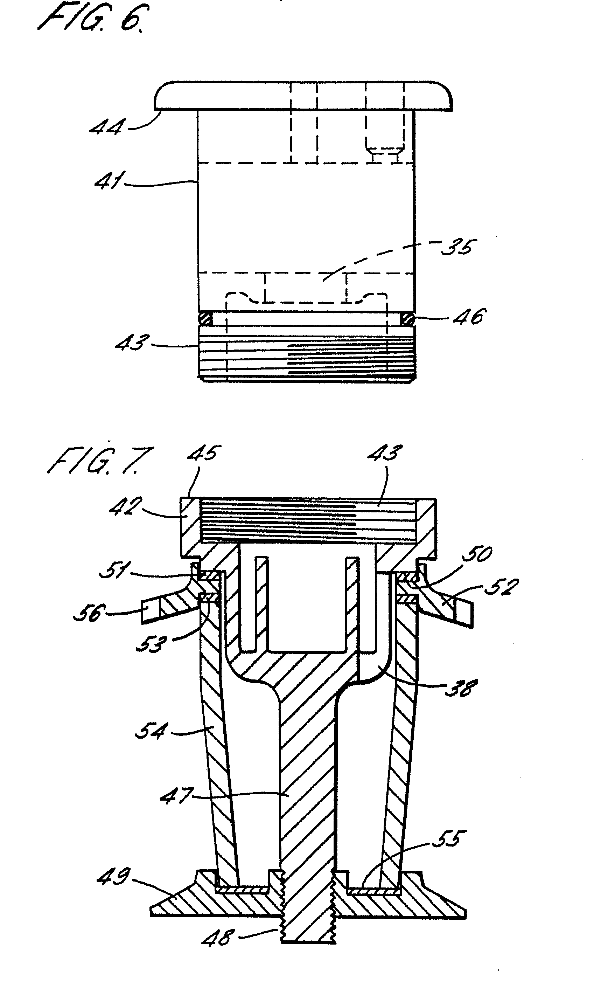

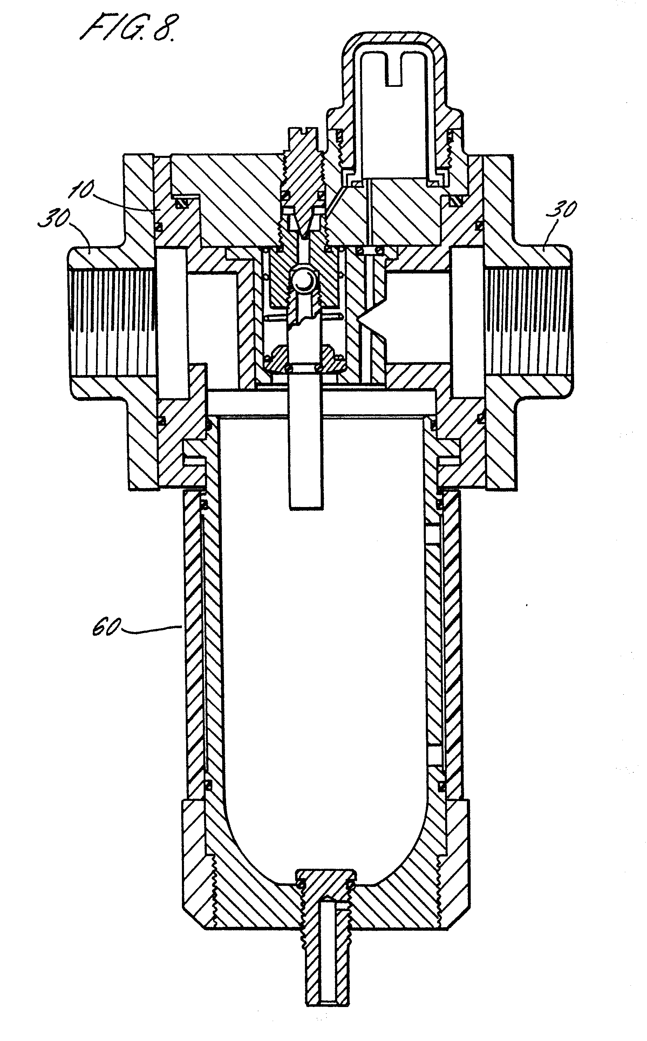

Filter unit 40 as shown in Figure 4 is composed of two parts, a top part 41 and a filter holder 42 shown in Figures 6 and 7 respectively. These two parts are each provided with a screw thread 43, the top part 41 having the male thread, so that the two parts of the filter unit may be screwed together. Top part 41 is provided with an abutment face 44 and filter holder 42 is provided with an abuttment face 45. These edges are such that, when the top part 41 is placed in bore 12 of main body 10 and then filter holder 42 is screwed onto the projecting thread 43, abutment faces 44 and 45 grip faces 24 and 25 respectively of main body 10 (see Figure 5). When the filter unit 40 is positioned within main body 10, then seal 46 will isolate part 19 from cavity 20.

Filter holder 42 has a limb 47 extending axially downwards, with a screw thread 48 at its lower end. A retaining baffle plate 49 is provided centrally with a female screw thread such that baffle 49 may be screwed onto the limb 47. Filter holder 42 also has another abutment face 50. Adjoining abutment face 50 is a sealing washer 51 below which is situated a deflector disc 52. Another sealing washer 53 separates deflector disc 52 from porous filter element 54. At the other end of filter element 54 is yet another sealing washer 55 which abuts the upper side of baffle plate 49. Thus deflector disc 52 and filter element 54 are clamped in place between baffle plate 49 and abutment face 50. Deflector disc 52 is provided around its circumference with a number of vanes 56.

In operation, unfiltered compressed air enters via part 18 and flows around and past the deflector disc 52. The vanes 56 on the deflector disc direct the incoming air downward in a whirling spiralling pattern. Larger particles of entrained water and oil are thrown out by centrifugal action, collect on the bowl sides 81, and spiral down past baffle plate 49 into the bottom 64 of the sump.

Dry centrifugally cleaned air reaches the porous filter element 54 where finer particles are filtered out. The air passes through a slot 38 in the filter holder 42, via hole 35 and port 19 to the downstream side of the filter 3.

The level of liquid separated from the air will gradually rise with the bottom 64 of the bowl 61. When this level reaches port 65 then the liquid will flow into the clearance volume 63. As the level of liquid within the bowl 61 continues to rise, so will the level of liquid within the clearance volume 63 rise. Since the pressure on the liquid is the same in both the bowl 61 and the clearance volume 63, because of the fluid connection of these two spaces by port 66, then the level of liquid in both will be substantially the same. An indication of the level of liquid with the sump may thereby be obtained, generally by viewing the sump from any direction, whilst at the same time the compressed air is contained within a metal casing.

A similar sump may also form a part of a lubricator device within a compressed air system, as shown in Figure 8. This lubricator device has the same main body 10, flanges 30 and sump 60 as the airline filter. Located within the body 10 is a lubricator assembly of known type.

This design has the advantage of the $360^{\circ}$ polycarbonate sight glass coupled with some of the safety advantages of a complete metal bowl.

The safety advantages of this design are shown in the situation of a brittle failure of the Polycarbonate sight "Glass", where the bowl would break into small fragments, the fragments would not be subjected to the same continueing pressure conditions as would a complete Polycarbonate bowl.

In both cases, the initial acceleration force (proportional to the pressure in the bowl) is the same. However, as the bowl expands, leakage will occur causing the pressure (and acceleration force) to decrease until the pressure equalises and no further increase in velocity takes place. At the same time as air is escaping from the fragmented bowl, so the bowl is being topped up from the air supply, thus reducing the rate at which the pressure decreases.

The present design, therefore, has safety advantages over the complete Polycarbonate bowl for two reasons.

The initial volume of the air acting on the Polycarbonate tube is very much reduced, thus the rate. of pressure drop, due to leakage, is much greater, resulting in faster removal of the accelerating force.

The volume is being 'topped up" with low flow rate from the small connecting holes, whereas the full bowl is being fed by the full line capacity supply. Again, therefore, the rate of pressure drop is much greater.

The overall result would be that the fragments would have a reduced maximum velocity and would travel less distance and have reduced impact energy.

Further, in the event of the more likely failure where a split develops in the bowl, the resulting leakage will be controlled at a safe level, with reduced pressure acting on the tube, by the small connecting holes, whereas the discharge from a split in a normal bowl would have
to be equivalent to full line flow before any significant
pressure reduction would occur.

CLAIMS:

1. A sump for air filtration or lubrication apparatus and comprising an inner metal bowl (61), and a transparent casing of plastics material (62) characterized in that the casing surrounds at least part of the bowl, there being a clearance volume (63) between the outside of of the metal bowl and the inside of the plastics casing, a plurality of ports (65,66) through the metal bowl connecting the inside (64) of the bowl to the clearance volume, and the edges of the plastics casing being seal to the metal bowl.

2. A sump as claimed in claim 1, characterized in that part (74) of the length of the bowl (61) is generally cylindrical, and in which the plastics casing (62) is a sleeve coaxial with the said cylindrical portion of the metal bowl.

3. A sump, as claimed in either claim 1 or claim 2, characterized in that the clearance volume (63) is annular and completely encircles the metal bowl (61).

4. A sump, as claimed in any of the previous claims, characterized in that it is provided with a valve (73) that may be opened to drain the sump of any liquid within it.

5. A sump, as claimed in any of the preceding claims, characterized in that the metal bowl (61) is provided with a plurality of external lugs (69) for interengagement with corresponding slots (22) in a body portion (10) of the apparatus, such that the lugs engage and lock the sump into its operative position, but also disengage and unlock the sump from its operative position when desired.

6. A sump, as claimed in any of the preceding claims, characterized in that the plastics casing (62) is of polycarbonate material.

7. An air filter unit for a compressed air system, characterized by the combination of a body portion (10) and a sump (60) as claimed in any of the preceding claims.

8. A lubricator unit for a compressed air system characterized in that it is fitted with a sump (60) as claimed in any of claims 1 to 6.

0091803

1/7

FIG. 1.

FIG 2.

FIG.3    3/7

FIG. 4.

5/7

FIG. 5.

FIG. 6.

FIG. 7.

FIG.8.

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | EP-A-0 047 352 (SCOVILL) * Page 5, line 25 - page 6, line 16; page 7, line 22 - page 8, line 11; page 9, lines 18-25; figures 1-5 * | 1-8 | F 16 N 7/34 F 16 N 19/00 |
| | --- | | |
| Y | US-A-3 261 426 (KUHLMAN) * Column 1, line 65 - column 2, line 32; column 2, line 71 - column 3, line 3; figures 1-4 * | 3 | |
| | --- | | |
| Y | FR-A-2 427 524 (IMI NORGREN) * Page 1, line 1 - page 3, line 13; figures * | 6 | |
| | --- | | |
| A | DE-C- 133 523 (LEHMANN) | | TECHNICAL FIELDS SEARCHED (Int. Cl. ³) |
| | --- | | |
| A | US-A-3 182 750 (GLEASON et al.) | | F 16 N G 01 F |
| | ----- | | |

The present search report has been drawn up for all claims

| Place of search THE HAGUE | Date of completion of the search 05-07-1983 | Examiner KOOIJMAN F.G.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82